# EUROPEAN PATENT APPLICATION

(11) **EP 4 268 975 A1**
(43) Date of publication of application: **01.11.2023**
(21) Application number: 22170801.9
(22) Date of filing: 29.04.2022
(51) Int. Cl.: B05C 5/02, B05C 9/06, H01M 4/04

(54) **BILAYER DEPOSITION**

(71) Applicant: LG Energy Solution, Ltd., Seoul 07335 (KR)
(72) Inventor: LEE, Seung Hyun, 34122 Daejeon (KR); KANG, Sung Mo, 34122 Daejeon (KR); LEE, Jae Pil, 34122 Daejeon (KR); KIM, Sang Min, 34122 Daejeon (KR); PARK, Jong Goo, 34122 Daejeon (KR)
(74) Representative: Goddar, Heinz J.

(57) **Abstract**

A die system comprises a first opening, a first cavity, a second opening, a second cavity, a first interposer and a second interposer. The first opening and the first cavity are fluidly connected to each other. The second opening and the second cavity are fluidly connected to each other. The second opening is spaced from the first opening. The die system is adapted to receive a first material in the first cavity and to discharge the first material along a first deposition direction through the first opening. The die system is adapted to extrude a second material in the second cavity and to discharge the second material along a second deposition direction through the second opening. The first interposer is arranged in the first cavity and adapted such that the first material discharged from the first cavity and along the first interposer forms a first thickness profile. The second interposer arranged in the second cavity and adapted such that the second material discharged through the second cavity and along the second interposer forms a second thickness profile that is different from the first thickness profile.

## Description

### TECHNICAL FIELD

The present invention relates to multilayer deposition of a material. The deposition may form part of a manufacturing process of a battery, in particular of a secondary battery.

### BACKGROUND

In a manufacturing process of a battery, it may be advantageous to deposit a material so as to have a specific thickness profile on a substrate. Particularly, it may be desirable to deposit the material in a manner that a thickness of the deposited material on the substrate is uniform except in areas in which the thickness is reduced, preferably in a precisely controlled manner. Hence, a technical problem maybe generating a specific thickness profile of a material deposited on a substrate in an efficient and precise manner.

### SUMMARY OF INVENTION

The technical problem known from the prior art is solved by the subject matter of the independent claims. Particular embodiments are given by the features of the dependent claims.

Herein, reference may be made to a battery. The battery may generally include or be any of a primary battery, a secondary battery or more generally an electrochemical cell for energy storage, unless indicated otherwise or technically inappropriate. In particular, the battery as used herein may refer to a secondary battery, i.e., a rechargeable battery. For example, the battery may comprise one or more layers of electrodes and one or more layers of separators stacked in a specific manner. The battery maybe a coin-type, cylindrical, prismatic, or pouch-type battery. Particularly, the battery may be configured to provide power to an electric vehicle. Hereinafter, a reference will be made to an indefinite, "a" battery, in order not to limit the subject matter to the manufacture of one particular battery. Alternatively or additionally, the battery may refer to a primary battery or non-rechargeable battery.

Provided is a die system comprising the structural and functional features as described below. Further provided are a secondary battery manufacturing system comprising the die system, and a secondary battery manufacturing method using the die system.

A die system may comprise a first opening, a first cavity, a second opening, a second cavity, a first interposer and a second interposer. The first opening and the first cavity are fluidly connected to each other. The second opening and the second cavity are fluidly connected to each other. The second opening is spaced from the first opening. The die system is adapted to receive a first material in the first cavity and to discharge the first material along a first deposition direction through the first opening. The die system is adapted to extrude a second material in the second cavity and to discharge the second material along a second deposition direction through the second opening. The first interposer is arranged in the first cavity and adapted such that the first material discharged from the first cavity and along the first interposer forms a first thickness profile. The second interposer arranged in the second cavity and adapted such that the second material discharged through the second cavity and along the second interposer forms a second thickness profile that is different from the first thickness profile.

Herein, the first deposition direction and the deposition direction may be defined by a flow direction of the respective material from the respective cavity towards the respective opening. Any width may be determined in a width direction, which is perpendicular to the first deposition direction and the second deposition direction. Any length as used herein is determined in the respective deposition direction of the first interposer and the second interposer. Furthermore, any height as used herein is determined in a height direction that is perpendicular to the width direction and the respective deposition direction of the first interposer and the second interposer.

The first deposition direction and the deposition direction are directional. Accordingly, a position or a flow along the first or second deposition direction is indicated herein as downstream, while a position or a flow against (in a direction opposite to) the respective deposition direction is indicated herein as upstream. The width direction and the height direction are used herein in a bi-directional manner, i.e., without any reference to a positive or negative direction.

In some examples, the first deposition direction and the second deposition direction are parallel to each other. Alternatively, the first deposition direction and the second deposition direction form an angle therebetween in a plane perpendicular to the width direction.

The first material and the second material may be or contain a same material, particularly an active material to produce a positive electrode or a negative electrode for a secondary battery. Alternatively, the first material and the second material may be or contain different materials. One or both of the different materials may be active materials to produce a positive electrode or a negative electrode for a secondary battery.

Any or both of the first material and the second material may be provided as a flowable, and/or viscous, material, which may be referred to as a slurry. Any or both of the first material and the second material may have a viscosity of 10² mPa·s or more at an atmospheric pressure (1013.25 hPa) and 25°C. More particularly, any or both of the first material and the second material may have a viscosity of 10³ mPa·s or more, 10⁴ mPa·s or more, 10⁶ mPa·s or more, 10¹⁰ mPa·s or more, or 10¹² mPa·s or more at the atmospheric pressure and 25°C. An upper boundary for the viscosity may be given by the transition into the solid state, and may be at or above 10²4 mPa·s at the atmospheric pressure and 25°C. Unless indicated otherwise, the viscosity may be determined using a viscosimeter according to the standard EN ISO 3219. Alternatively or additionally, the viscosity may be measured, for example, using a Stabinger viscometer SVM kinematic viscometer in accordance with ASTM 7042, at the atmospheric pressure and 25°C. Any or both of the first material and the second material may include any of the corresponding features described below.

Any or both of the first material and the second material may be or contain an active material for manufacturing a battery, in particular a secondary battery. Any or both of the first material and the second material may contain a binder to which the active material, provided for example as a granular and/or powder material, is admixed. The active material may be or contain, as a non-exhaustive list of examples, lithium-cobalt oxide (LCO), lithium nickel cobalt manganese oxide (NCM), lithium nickel cobalt aluminum oxide (NCA), lithium manganese oxide (LMO), lithium nickel manganese spinel (LNMO), lithium iron phosphate (LFP). The active material may additionally include graphite, pure lithium and/or silicon. Any or both of the first material and the second material may additionally contain solid conductive particles, for example carbon black and/or carbon nanotubes. Any or both of the first material and the second material may additionally contain dispersants.

The binder may be a polymeric binder. The binder may be or include polyvinylidene fluoride (PVDF), polymethyl acrylate (PMMA), carboxymethylcellulose (CMC), polyacrylate, xanthan gum, polyethylene glycol, or styrene butadiene. The slurry may further contain one or more liquid components. The liquid component may be or include water and/or an organic solvent, such as tetrahydrofuran (THF) or N-methyl-2-pyrrolidon (NMP).

Any of the first material and the second material may be deposited on a substrate. The substrate may be an electrode substrate. The substrate may be a metal foil made of one or more metal materials, such as copper, nickel, or aluminum.

Herein, reference is made to a "respective" interposer, a "respective" cavity, a "respective" opening, a "respective" material, etc. This diction indicates the structural and/or functional elements belonging to the corresponding interposer, cavity, opening, material, etc. and replaces the ordinary notation in full length. Hence, as an example, "the first interposer and the second interposer in the respective cavity" replaces "the first interposer and the second interposer in the first cavity and the second cavity, respectively", or "the first interposer in the first cavity and/or the second interposer in the second cavity".

The die system may be configured to deposit the first material and the second material through the first opening and the second opening, respectively. Particularly, the die system as disclosed herein is capable of depositing the first material and the second material in a subsequent manner, in this order or in a reversed order. The die system may be also referred to as an ejector, injector, deposition system or extrusion system. The die system may be operable to receive the first material and the second material in the respective cavity and to discharge the first material and the second material through the respective opening. The first material and/or the second material may be fed to the die system by a respective supply system as described below. Herein, the process of discharging the first material and the second material by the die system in the above described manner may be also be referred to by using the expression deposit (and also depositing and deposition). Furthermore, in the die system, a respective cross section for a flow of the first material and the second material, given by size and shape of the respective cavity and the respective opening, may be reduced such that the first material and the second material are discharged by extrusion through the respective cavity and the respective opening.

The die system may be implemented as a single apparatus or a single device, or as a distributed system comprising multiple apparatuses or devices. In particular, the first cavity and the second cavity may be provided in a single device. Alternatively, the first cavity and the second cavity may be implemented as two separate devices. The die may further include any of the corresponding features as described below.

Any or both of the first cavity and the second cavity may refer to a void volume formed in a body member of the die system. Although being a void volume, the first cavity and the second cavity are considered herein as structural features of the die system. In particular, the first cavity and the second cavity, and the first opening and the second opening, may be formed by gaps between individual die parts. The gaps may be formed by the respective interposer. Alternatively, any or both of the first cavity and the second cavity may be formed in a respective single-piece body of the die system. The first and second cavities may be additionally configured as described below.

Any or both of the first cavity and the second cavity may be shaped and dimensioned so as to receive the respective material. Any or both of the first cavity and the second cavity may be fluidly connected to a first supply system and a second supply system, respectively, configured to feed the respective material to the respective cavity. A first feed port and/or a second feed port maybe provided in the respective cavity and enable an inlet of the respective material to the respective cavity. A first manifold and/or a second manifold may be formed communicating with the respective cavity such that the respective material fed to the respective cavity first spreads out in the respective manifold before filling the respective cavity. The respective feed port, if applicable, may be formed within the respective manifold. Any of the first manifold and the second manifold may have a shape of an elongated recess along the width direction. In addition, any of the first manifold and the second manifold may be configured as described below.

The first cavity and the second cavity are fluidly connected to, or communicate with, the first opening and the second opening, respectively. Any or both of the first cavity and the second cavity may be dimensioned and shaped such to allow the respective material that is received in the cavity to spread and/or to flow towards the respective opening. In particular, any or both the first cavity and the second cavity may be configured to be filled with the respective material and to allow the respective material to discharge the through the respective opening.

Any or both of the first opening and the second opening may be two-dimensional void area formed in a surface of the die system. The surface maybe indicated or define a front side of the die system. As mentioned, the die system may include multiple individual die parts, including, for example, an upper die part, an intermediate die part and/or a lower die part. Any or both of the first opening and the second opening may be formed by a respective gap between the corresponding die parts. Alternatively, any or both of the first opening and the second opening may be formed as a respective void area at a single-piece body part of the die system so as to expose the respective cavity to the outside.

When viewing in the direction opposite to the first deposition direction, the first opening may have a slit-shape elongated along the width direction. Similarly, the second opening may have a slit-shape elongated along the width direction when viewing in the direction opposite to the second deposition direction. Any or both of the first opening and the second opening may have a uniform height, as determined in a direction perpendicular to the width direction and to the respective deposition direction.

The first thickness profile and the second thickness profile as recited herein may indicate a cross-sectional outline of the respective material deposited by the die system on a substrate projected on a plane that is perpendicular to the respective deposition direction, i.e., when viewed along the respective deposition direction. The first thickness profile and the second thickness profile may correspond to a respective distribution of a deposited amount of the respective material along the width direction. Herein, the deposited amount of the respective material in a particular position in terms of the width direction is referred to a thickness of the respective deposited material. The thickness profile may refer to the physical extension of the deposited first or second material on a substrate. Additionally or alternatively, the deposited amount of the first or second material may also be quantified as a loading which indicates a deposited weight per unit area (e.g., in g/m²).

For example, if the deposited amount of the first material or the second material does not change in the width direction, the respective thickness profile may be flat, i.e., the thickness may not change (significantly) along the width direction. If the deposited amount of the first material or the second material changes in the width direction, the respective thickness profile may exhibit a decrease where the deposited amount is decreased, and an increase where the deposited amount is increased.

Since the first material and the second material each may be or include a flowable (viscous) material as described above, the materials may spread, i.e., flow in the width direction to a certain extent depending on the material properties, after discharging through the respective opening. This may be referred to as sliding. Hence, the thickness profile may exhibit rounded edges instead of sharp edges in positions where the thickness changes. Furthermore, since the first and second materials each may be or include a flowable (viscous) material mixture containing liquid components and solid components as described above, the thickness profile may exhibit outlines that are coarse (to a certain degree) rather than perfectly flat, smooth or linear. The first thickness profile and the second thickness profile may be additionally configured as described below.

As described below, an overall thickness of the first material deposited on a substrate may be controlled by the first mass flow rate. An overall thickness of the second material deposited on a substrate may be controlled by the second mass flow rate. Herein, an overall thickness may indicate a thickness level of the respective deposited material averaged over the width direction. Changing the first mass flow rate and the second mass flow rate may result in changing an overall thickness ratio of the first material and the second material. For example, maintaining the first mass flow rate and the second mass flow rate to be equal may result in the overall thicknesses of the first material and the second material being equal. Increasing one of the first and second mass flow rates while keeping the other one constant may result in increasing a proportion of the respective material with the increased mass flow rate in a combined thickness profile of the first material and the second material.

Any or both of the first interposer and the second interposer may be provided so as to reduce a void volume of the respective cavity in a defined manner in terms of size, position and shape. Any or both of the first interposer and the second interposer may be referred to as a shim, a spacer, a flow guide, a flow guiding plate or the like. As such, one or each of the first interposer and the second interposer may be provided as a single piece that is physically separate from the respective cavity, and may be inserted into the respective cavity. Alternatively, any of the first interposer and the second interposer may be provided as an integral part protruding into the respective cavity. Any or both of the first interposer and the second interposer may be in addition configured as described in detail below.

The subject matter disclosed herein may allow for a modification of the first thickness profile and the second thickness profile by means of the first interposer and the second interposer, respectively. The first interposer and the second interposer may be each shaped, dimensioned and arranged in the respective cavity such that the respective material discharged through the respective cavity and along the respective interposer forms the respective thickness profile. For this purpose, any of the first interposer and the second interposer may be shaped, dimensioned and arranged in a manner corresponding to the respective thickness profile as desired. For this purpose, the first interposer and/or the second interposer maybe configured as described in detail below.

The first thickness profile and the second thickness profile may be different from each other due to different shapes, dimensions and/or arrangements of the first interposer and the second interposer. In particular, the first interposer and the second interposer may have a same general shape, in a view perpendicular to the respective deposition direction and the width direction. In specific examples, the first interposer may have additional structural features in addition to the general shape, while the second interposer does not have such additional structural features and/or has one or more different additional features.

For example, the general shape of the first interposer and the second interposer may be such that a base bar (corresponding to a base portion as described below) from which multiple prongs (corresponding to flow barriers) protrude in the respective deposition direction. Overall sizes, such as a total width and a total length, of the first interposer and the second interposer may be equal or different. Total thicknesses of the first interposer and the second interposer may be equal or different.

The system and method as disclosed herein allow for depositing a first material and a second material with different thickness profiles in a simple and precise manner. In particular, the thickness profile of a deposited material, or thickness profiles of two different materials deposited upon each other may be precisely controlled. Furthermore, the use of two interposers that may be configured individually and/or in relation to each other may facilitate the control of the thickness profile of a deposited material or the thickness profiles of two different materials deposited upon each other. In particular, the subject matter disclosed herein may allow for the thickness profile of one or more materials deposited on a substrate to be finely adjusted. Furthermore, the subject matter disclosed herein may allow for a precise and efficient adjustment and configuration of a combined thickness profile of the first material and the second material deposited on a substrate. Thus, the deposition of the material(s) according to a specific manufacturing requirements may be facilitated and improved.

Particularly, the material may be or include an active material for manufacturing a secondary battery, especially for a positive electrode. It may be desirable that the thickness of the deposited material is reduced in one or more specific positions. In a specific example, an electrode assembly may comprise a positive electrode and a negative electrode arranged on opposite sides of a separator sheet. In such an example, it may be desirable that the thickness of the positive electrode material is smaller than a thickness of the negative electrode material on the reverse side of the separator sheet. To ensure that this requirement is fulfilled also in a position where the thickness of the negative electrode is locally reduced, it may be advantageous to reduce also the thickness of the positive electrode material in the exactly corresponding position. This may prevent an undesirable crystallization of a component of the material, in particular lithium, due to an excess of the positive electrode material compared to the negative electrode material at a same position on the reverse side.

Typically, a material composition used for producing a positive electrode differs from a material composition used for producing a positive electrode. As such, the material composition for a positive electrode and the material composition for a negative electrode may be different at least in some material properties, such as a viscosity and a contact angle with a given substrate material. In addition, it may be advantageous that a loading ratio (which is a ratio of weights of the deposited materials per unit area) of the material for a negative electrode to material of a positive electrode active material may be greater than 1.0, particularly greater than 1.03, or greater than 1.04, or greater than 1.06, and smaller than 1.15, particularly smaller than 1.12, or smaller than 1.10. A loading of the material for a positive electrode may be smaller than a loading of the material for a negative electrode in a corresponding position, preferably by a factor of 0.85 to 0.99, or by a factor of 0.90 to 0.98, or by a factor of 0.92 to 0.97, or by a factor of 0.92 to 0.95. Here, the loading may refer to a deposited mass per unit area, e.g., g/m².

The subject matter disclosed herein may allow for a fine adjustment of the deposited amount of the material individually for the negative electrode and the positive electrode in order to fulfil the above requirements. Accordingly, the subject matter disclosed herein may allow for a precise configuration of the thickness profile of the material or material mixture deposited on a substrate, particularly for manufacturing a secondary battery. Furthermore, the subject matter disclosed herein may allow for a more efficient usage of the deposited material(s).

The combination of the flow narrowing portion and the flow shaping portion may be specifically configured for individual demands and requirements. Hence, the subject matter as disclosed herein also increases the versatility of the system for deposition of the material on a substrate. For this purpose, the flow narrowing portion and the flow shaping portion may be specifically shaped and specifically dimensioned individually as well as in relation to each other.

In some examples, the first interposer comprises a base portion and a first number of flow barriers. The flow barriers of the first interposer may each extend from the base portion of the first interposer towards the first opening in the first deposition direction. Additionally or alternatively, the second interposer comprises a base portion and a second number of flow barriers. The flow barriers of the second interposer may each extend from the base portion of the second interposer towards the second opening in the second deposition direction. The first number may be different from the second number. In particular, the first number may be larger than the second number.

Accordingly, any or both of the first interposer and the second interposer may comprise one or more flow barriers that each extend, and particularly are elongated, from the respective base portion in the respective deposition direction. Each of the flow barriers occupies a volume inside the respective cavity, and may thereby hamper or prevent the respective material from flowing across. As such, the first or second material may be forced to flow along sidewalls of the flow barriers. Thus, since the flow barriers extend, and are particularly elongated, in the respective deposition direction, the flow barriers may be configured to guide the respective material in the respective deposition direction towards the respective opening. As a result, the deposited amount of the respective material may be reduced at positions (with respect to the width direction) corresponding to positions of the flow barriers. Furthermore, an extent to which the deposited amount is reduced may be modified by the size of each of the flow barriers, which may be determined by a length, a width and/or a thickness of the respective flow barrier. Additionally, a shape of each of the flow barriers may also affect the deposited amount of the respective material at the corresponding position.

The first thickness profile and the second thickness profile may be formed by means of flow barriers in the above-described manner. However, the modification of the thickness profiles by the respective flow barriers is merely an example. The first interposer and/or the second interposer may have different or additional suitable structural features and be suitably arranged to provide the respective desired thickness profile.

As described above, the first thickness profile and the second thickness profile may be formed by means of a shape, a size and an arrangement of the respective interposer in the respective cavity. With the first number being different from the second number, the first interposer and the second interposer comprises different numbers of flow barriers in the respective cavity. This may result in that the first thickness profile and the second profile of the deposited first material and the deposited second material, respectively, being different from each other.

In some examples, the base portion of the first interposer is elongated along the width direction, and at least some of the flow barriers of the first interposer are elongated along the first deposition direction. Additionally or alternatively, the base portion of the second interposer may be elongated along the width direction, and at least some of the flow barriers of the second interposer may be elongated along the second deposition direction.

The width direction may be as defined above and may be perpendicular to the first deposition direction and perpendicular to the second deposition direction. The flow barriers of any of the first interposer and the second interposer may be configured as described above.

In some examples, the first interposer includes two side flow barriers arranged at opposite outermost positions of the base portion of the first interposer with respect to the width direction.

Similarly, the second interposer may also include two side flow barriers arranged at opposite outermost positions of the base portion of the second interposer with respect to the width direction. The side flow barriers of the second interposer may be as described above. Furthermore, the flow barriers of the second interposer may correspond to a subset of the flow barriers of the first interposer with respect to shapes, sizes and/or positions. Hence, the side flow barriers of the first interposer and the second interposer may be equal in terms of at least one of the positions, the sized and the shapes.

The side flow barriers may be the outermost ones of the flow barriers as described above. Accordingly, the side flow barriers of any of the first interposer and the second interposer may extend, and particularly be elongated, from the respective base portion in the respective deposition direction. In particular, the side flow barriers may be configured so as to prevent the respective material from flowing through in the width direction. Accordingly, the side flow barriers of the first interposer and/or the second interposer may be configured to confine the respective material in a volume within the respective cavity. As such, the first material and the second material may be confined within a volume defined by the side flow barriers and the base portion the respective interposer.

Here, the side flow barriers may provide a left edge boundary and a right edge boundary for the first material and/or the second material. The base portion of the respective interposer may provide a backside boundary for the respective material. Herein, the expressions left and right may indicate the opposite sides of the die system with respect to the width direction in a plan view perpendicular to the respective deposition direction and the width direction. The expressions front side and backside may indicate the opposite sides with respect to the respective deposition direction in the plan view.

In some examples, at least two of the flow barriers of the first interposer have widths that are different from one another. Similarly, the at least two of the flow barriers of the second interposer may have widths that are different from one another.

As described above, the widths of the flow barriers may affect the size of an area in which the deposited amount of the respective material is reduced. Furthermore, the widths of the flow barriers also affect the extent to which the deposited amount of the respective material is reduced. Accordingly, the first thickness profile and/or the second thickness profile may be finely configured by means of the widths of the flow barriers.

In specific examples, the first interposer and the second interposer may each comprise a central flow barrier that has an increased width so as to provide a wide material free area (i.e., an area free of the respective material) in a corresponding position of the respective thickness profile. In addition, the first interposer and/or the second interposer may comprise one or more auxiliary flow barriers having a smaller width than the increased width of the central flow barrier so as to provide a narrow material free area in the corresponding positions. Additionally or alternatively, any of the flow barrier may be dimensioned so as to provide a thickness reduced area (i.e., an area in which the deposited amount of the respective material is reduced below adjacent areas) in a corresponding position of the respective thickness profile. In such examples, the auxiliary flow barrier may be positioned between the central flow barrier and one of the side flow barriers described above.

In some examples, the first number is greater than the second number. The flow barriers of the second interposer may correspond to a subset of the flow barriers of the first interposer with respect to positions, shapes and/or sizes.

As described above, the first interposer and the second interposer may have a same general shape. In particular, the general shape may be such that the first interposer and the second interposer each have a respective base portion and a respective number of flow barriers extending from the respective base portion in the respective deposition direction. With the first number being greater than the second number, the flow barriers of the second interposer may form a part of the general shape which in common for the first interposer and the second interposer, i.e., the first interposer may comprise the same flow barriers as the second interposer. The first interposer may comprise one or more additional flow barriers that is/are absent in the second interposer.

Here, the positions may be referred to with respect to the width direction in a plan view perpendicular to the respective deposition direction and the width direction. Accordingly, the flow barriers of the second interposer may be aligned with the corresponding flow barriers of the first interposer in the plan view. The corresponding flow barriers of the first interposer may be the subset of the flow barriers of the first interposer.

The sizes may be as described above and may include a respective length and a respective width of each of the flow barriers. The shapes may also refer to the plan view specified above. Accordingly, the flow barriers of the second interposer may be congruent with the corresponding flow barriers of the first interposer in the plan view.

The first number and the second number are not particularly limited and may be determined according to requirements to the target product (e.g., a secondary battery to be produced) and specifications of the deposition process. In specific examples, each of the first interposer and the second interposer may comprise two side flow barriers as described above, which may be taken into account in the first number and the second number. In addition, the first interposer and the second interposer may each comprise a central flow barrier as described above. The first interposer may additionally comprise two auxiliary flow barriers between the side flow barriers and the central barrier. Accordingly, in such examples, the first number may be five and the second number may be three. This, however, is merely an example. More generally, the first number and the second number may be each, and independently from each other, any natural number between 2 and 20, particularly 3, 4, 5, 6, 7, 8, 9 or 10.

In some examples, the die system further comprises an upper die part and an intermediate die part. The upper die part may have a flat lower end face. The upper die part may be arranged such that the lower end face of the upper die part is parallel to the first deposition direction and the width direction. The intermediate die part may have a flat upper end face. The intermediate die part may be arranged such that the upper end face of the intermediate die part is parallel to the first deposition direction and the width direction. The upper die part and the intermediate die part may be arranged such that the lower end face of the upper die part and the upper end face of the intermediate die part face each other. The first opening and the first cavity may be formed by a gap between the lower end face of the upper die part and the upper end face of the intermediate die part.

Accordingly, a first die may be provided comprising the upper die part and the intermediate die part. The upper die part and the intermediate die part may be provided as physically separate parts, and the first interposer may be arranged such to form a gap therebetween, thereby providing the first cavity and the first opening. Alternatively, the upper die part and the intermediate die part may be provided as integral parts of the first die with the first cavity being formed therein and the first opening being formed at a front side thereof.

Furthermore, the intermediate die part may have a flat lower end face. The lower end face of the intermediate die part may extend parallel to the second deposition direction and the width direction. As described above, the first deposition direction and the second deposition direction may be parallel to each other or may form an angle therebetween (in a plane perpendicular to the width direction).

In some examples, the die system further comprises a lower die part. The lower die part may have a flat upper end face. The lower die part may be arranged such that the upper end face of the lower die part is parallel to the second deposition direction and the width direction. The intermediate die part and the lower die part may be arranged such that the lower end face of the intermediate die part and the upper end face of the lower die part face each other. The second opening and the second cavity may be formed by a gap between the lower end face of the intermediate die part and the upper end face of the lower die part.

Accordingly, a second die may be provided comprising the intermediate die part and the lower die part. The intermediate die part and the lower die part may be provided as physically separate parts, and the second interposer may be arranged such to form a gap therebetween, thereby providing the second cavity and the second opening. Alternatively, the intermediate die part and the lower die part may be provided as integral parts of the second die with the second cavity being formed therein and the second opening being formed at a front side thereof.

As such, the first die and the second die containing the first cavity and the second cavity, respectively, may be provided as a single device physically connected via the intermediate die part. However, the subject matter disclosed herein is not limited thereto. For example, alternatively, the first cavity may be formed in the first die in the above manner, while the second cavity may be formed between the above-described lower die part and another upper die part that is adapted in a similar manner to the above-described intermediate die part. As such, the first cavity and the second cavity may be physically separated and spaced from each other.

In some examples, the first opening and the second opening are spaced apart in a direction perpendicular to the first deposition direction and/or perpendicular to the second deposition direction. As such, the first opening and the second opening may be spaced apart in a front view opposite to the first deposition direction and/or opposite to the second deposition direction.

In particular, a solid body, for example the intermediate die part as described above, may separate between the first opening and the second opening. The first opening and the second opening may be spaced apart in a direction perpendicular to the width direction. In other words, the first opening and the second opening may be aligned in a height direction perpendicular to either of the first deposition direction and the second deposition direction. In examples where the first deposition direction and the second deposition direction are parallel to each other, the first opening and the second opening may be spaced apart in the height direction that is perpendicular to the first deposition direction, the second deposition direction and the width direction.

In some examples, the first opening is offset from the second opening with respect to the first deposition direction. The first opening being offset may refer to an imaginary projection of the second opening into the first cavity onto a plane that is parallel to the first deposition direction and the width direction. Particularly, the first opening and the second opening may be offset from each other in a cross-sectional side view along the width direction (i.e., perpendicular to the first and second deposition directions). In particular, the first opening may be offset from the second opening in a direction opposite to the first deposition direction. The offset may facilitate a subsequent deposition of the second material and the first material.

In some examples, the die system further comprises a first supply system and a second supply system. The first supply system may be fluidly connected to the first cavity. The first supply system may be configured to feed the first material to the first cavity at a first mass flow rate. The second supply system may be fluidly connected to the second cavity. The second supply system may be configured to feed the second material to the second cavity at a second mass flow rate. The first supply system and the second supply system may be operable such that the first mass flow rate and the second flow rate are controllable independently from each other.

An overall thickness of the first material deposited on a substrate may be controlled by the first mass flow rate. An overall thickness of the second material deposited on a substrate may be controlled by the second mass flow rate. Herein, an overall thickness may indicate a thickness level of the respective deposited material averaged over the width direction. Thus, changing the first mass flow rate and the second mass flow rate may result in changing an overall thickness ratio of the first material and the second material. For example, maintaining the first mass flow rate and the second mass flow rate to be equal may result in the overall thicknesses of the first material and the second material being equal. Increasing one of the first and second mass flow rates while maintaining the other one may result in increasing a proportion of the respective material in the combined thickness profile.

In particular, the first supply system and/or the second supply system may be configured to generate a pressure gradient such that the first material and/or the second material, respectively, is pressed towards the respective cavity. As described above, a respective cross section for the first material and the second material may be reduced when passing through the respective cavity, thereby resulting in an extrusion of the respective material. The respective supply system may provide the corresponding pressure.

In specific examples, each of the first supply system and the second supply system may comprise a respective pump to feed the respective material to the respective cavity. The pump of the first supply system and the pump of the second supply system may be operated individually, and differently if required, such that the first material and the second material may be fed to the respective cavity at the respective mass flow rate. For example, increasing an operating power of the pump of the first supply system may increase the first mass flow rate.

Further provided is a secondary battery manufacturing system comprising the die system as described above. The secondary battery manufacturing system may comprise a coating roll that is configured to convey a substrate towards the die system so as to enable the die system to deposit the first material and the second material on the substrate. The coating roll may be arranged in relation to the die system and operable to rotate such that the substrate is first conveyed in front of the second opening and then in front of the first opening.

Accordingly, the secondary battery manufacturing system may be operated to deposit the second material and subsequently to deposit the first material on the substrate. At the same time, the thickness profiles of the first and second materials deposited on the substrate may be configured in the manner described above, thereby providing a combined thickness profile of the first material and the second material that is finely adjusted. The die system of the secondary battery manufacturing system may include any of the corresponding features described herein. The secondary battery manufacturing system may achieve any of the technical effects described above.

In some examples, the system may further comprise a spacer tape that is arranged on the coating roll along a circumferential direction of the coating roll. The spacer tape may reduce a thickness of any material deposited on the substrate that is conveyed on the coating roll. The spacer tape may further contribute to forming the first thickness profile and/or the second thickness profile.

In some examples, and as described above, the first material and/or the second material may contain an active material of (i.e., to produce) a secondary battery. Particularly, the first material and/or the second material may contain an active material to produce a positive electrode of a secondary battery. Alternatively, any or both of the first material and the second material may contain an active material to produce a negative electrode of a secondary battery.

Further provided is a secondary battery manufacturing method. The secondary battery manufacturing method may use the die system as described herein. The secondary battery manufacturing method may be carried out by using the die system and/or the battery manufacturing system as described herein. As such, the secondary battery manufacturing method may include any of the features described herein with respect to the die system and the secondary battery manufacturing system. The secondary battery manufacturing method may achieve any of the technical effects described above.

The secondary battery manufacturing method comprises: feeding the second material to the second cavity of the die system such that the second material fills the second cavity and discharges through the second opening; conveying a substrate in front of the second opening of the die system such that the second material is deposited on the substrate; feeding the first material to the first cavity of the die system such that the first material fills the first cavity and discharges through the first opening; and conveying the substrate in front of the first opening of the die system such that the first material is deposited on the substrate with the first thickness profile on top of the second material deposited on the substrate with the first thickness profile.

### BRIEF DESCRIPTION OF THE DRAWINGS

The accompanying drawings illustrate some particular examples and are intended to help understanding the present invention. Herein and in the drawings, a same reference sign or a series of reference signs may be used in different examples to indicate a same, similar or analogical element. Generally, a repetitive description is omitted hereinafter. Unless indicated otherwise or technically inappropriate, the examples described below with reference to the drawings can include any of the features described above. Furthermore, the examples described below with reference to the drawings can include any of the features described with reference to the respectively previous example, unless indicated otherwise or technically inappropriate, for the sake of brevity and efficiency of the description. It is noted that the drawings may be not to scale. Particular features and aspects may be enlarged or reduced to be clearly displayed.
FIG. 1 schematically shows a cross-sectional side view of a system according to an example.
FIG. 2A schematically shows a cross-sectional side view of a die system according to an example.
FIG. 2B schematically shows a perspective view of a die system according to an example, particularly of the example in FIG. 2A.
FIG. 3 schematically shows a cross-sectional side view of a die system according to an example.
FIG. 4 schematically shows plan views of interposers and thickness profiles according to examples.
FIG. 5A schematically shows a cross-sectional plan view of a system according to an example.
FIG. 5B schematically shows a cross-sectional plan view of a system according to an example.

### DETAILED DESCRIPTION

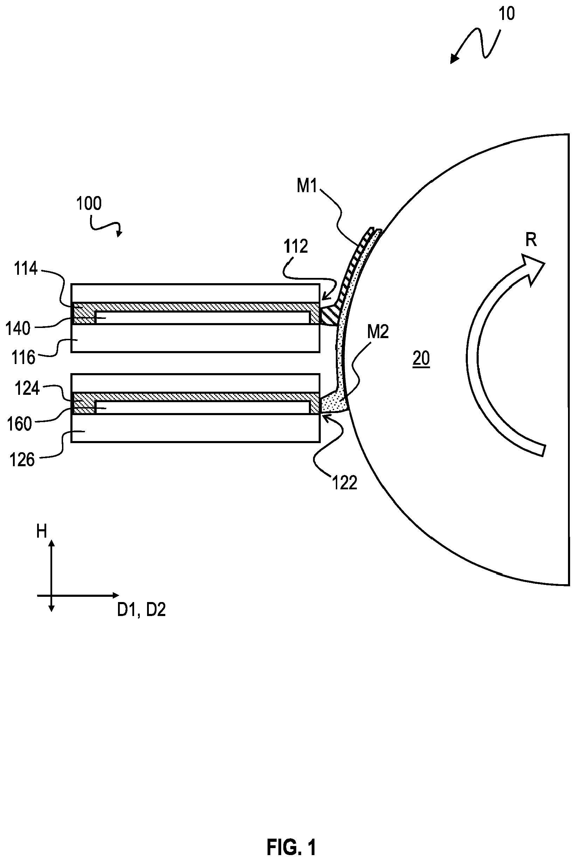

FIG. 1 schematically shows a cross-sectional side view of a system 10 according to an example. The system 10 maybe a secondary battery manufacturing system as described above. The system 10 comprises a die system 100 and a coating roll 20. The die system 100 and the coating roll 20 may be each configured as described above.

The die system 100 comprises a first opening 112 and a first cavity 114 that are fluidly connected to each other. The die system 100 is configured to receive a first material M1 in the first cavity 114. The first cavity 114 is shaped and dimensioned so as to receive the first material M1. The first material M1 may contain a slurry including an active material, in particular an active material to produce a positive electrode of a secondary battery. The die system 100 is adapted to receive the first material M1 in the first cavity 114 and to discharge the first material M1 along a first deposition direction D1 through the first opening 112.

The die system 100 further comprises a second opening 122 and a second cavity 124 that are fluidly connected to each other. The die system 100 is configured to receive a second material M2 in the second cavity 124. The second cavity 124 is shaped and dimensioned so as to receive the second material M2. The second material M2 may contain a slurry including an active material, in particular an active material to produce a positive electrode of a secondary battery. The first material M1 and the second material M2 may be identical or different. The die system 100 is adapted to receive the second material M2 in the first cavity 124 and to discharge the second material M2 along a first deposition direction D2 through the second opening 112.

The second opening 122 is spaced apart from the first opening 112, in particular in a height direction H that is perpendicular to the first deposition direction D1 and second deposition direction D2 and a width direction (not shown in FIG. 1). In the example in FIG. 1, the first deposition direction D1 and the second deposition direction D2 are parallel. This may due to the particular arrangement of the cavities 114, 124 in relation to the respective opening 112, 122 as shown in FIG. 1.

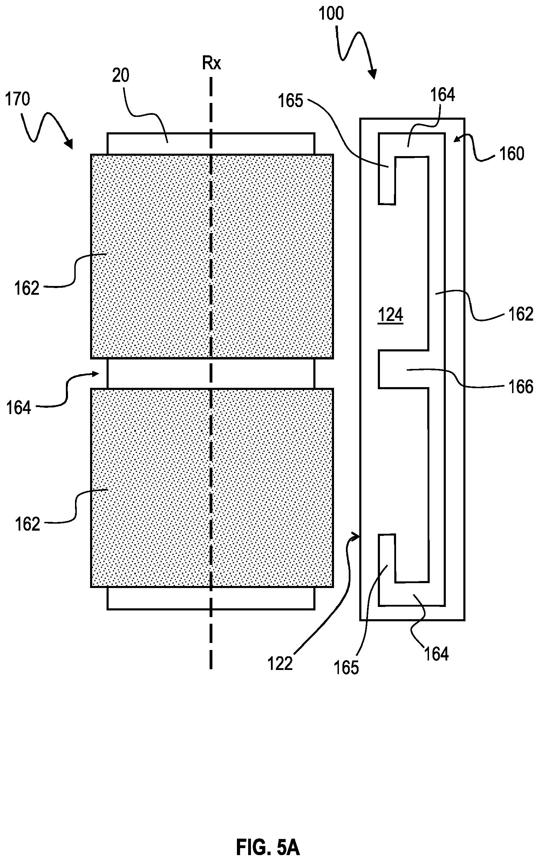

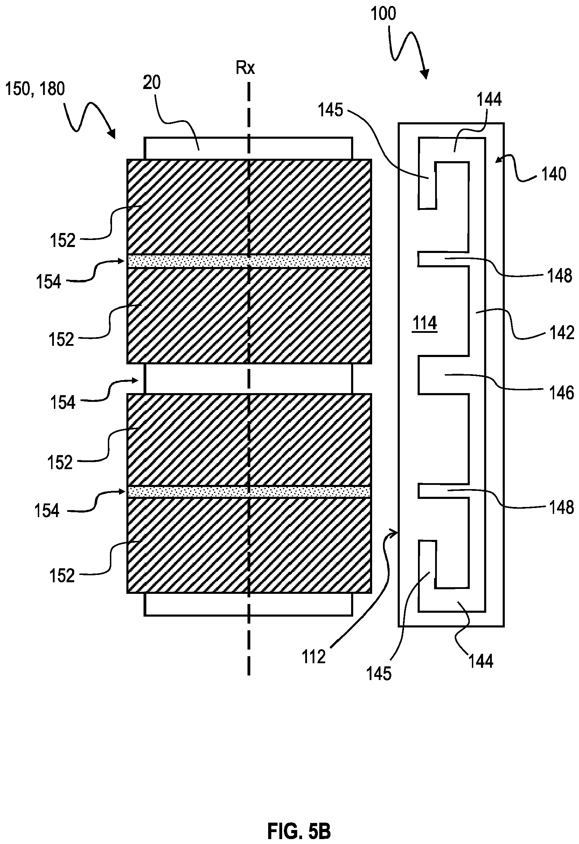

The die system 100 further comprises a first interposer 140 is. The first interposer 140 is arranged in the first cavity 114 and adapted such that the first material M1 discharged through the first cavity 114 and along the first interposer 140 forms a first thickness profile (e.g., see FIG. 5).

The die system 100 further comprises a second interposer 160. The second interposer 160 is arranged in the second cavity 124 and adapted such that the second material M2 discharged through the second cavity 124 and along the second interposer 120 forms a second thickness profile (e.g., see FIG. 5).

The first cavity 114 may be formed in a first die 116. The first die 116 may comprise separate parts, such as an upper die part and an intermediate die part, and the first cavity 114 may be formed by a gap between the separate parts. Alternatively, the first die 116 may be comprise a body part in which the first cavity 114 is formed, with the first opening 112 being formed at a front side thereof facing the coating roll 20.

The second cavity 124 may be formed in a second die 126. The second die 126 may comprise separate parts, such as an intermediate die part and a lower die part, and the second cavity 124 may be formed by a gap between the separate parts. Alternatively, the second die 126 may be comprise a body part in which the second cavity 124 is formed, with the second opening 122 being formed at a front side thereof facing the coating roll 20.

The coating roll 20 is configured to convey a substrate (not shown) towards the die system 100 so as to enable the die system 100 to deposit the first material M1 and the second material M2 on the substrate. The coating roll 20 is arranged in relation to the die system 100 and is operable to rotate such that the substrate is first conveyed in front of the second opening 122 and then in front of the first opening 112. Although not explicitly shown, optionally, the system 10 may further comprise a spacer tape arranged on the coating roll 20 along a circumferential direction thereof. The spacer tape may be configured as described above. The spacer tape may cause a deposited amount of the first material M1 and/or the second material M2 to be reduced in the corresponding position on the substrate.

The coating roll 20 may be operable to rotate in the rotation direction R as indicated in FIG. 1. A substrate, which maybe an electrode substrate made of a metal as described above, may be conveyed on the coating roll 20 first in front of the second opening 122 and subsequently in front of the first opening 112. At the same time, the die system 100 may operate such that the second material M2 is discharged from the second cavity 124 through the second opening 122 onto the substrate, and that the first material M1 is discharged from the first cavity 114 through the first opening 112 onto the substrate and/or on top of the second material M2 that is deposited on the substrate and conveyed in front of the first opening 112 by the coating roll 20.

The die system 100 may include any of the corresponding features as described above, which are not repeated here for the sake of brevity. In particular, the first interposer 140 and the second interposer 160 may be each configured as described above. Accordingly, the system 10 and particularly the die system 100 of the example as shown in FIG. 1 may achieve the technical effects described above.

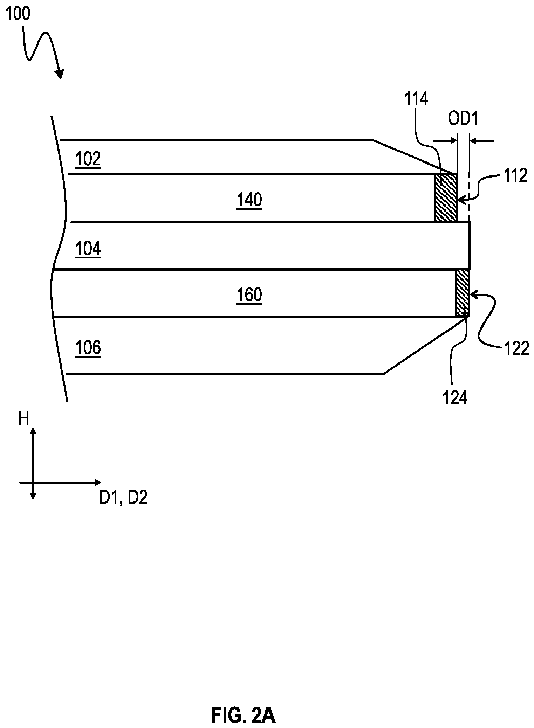

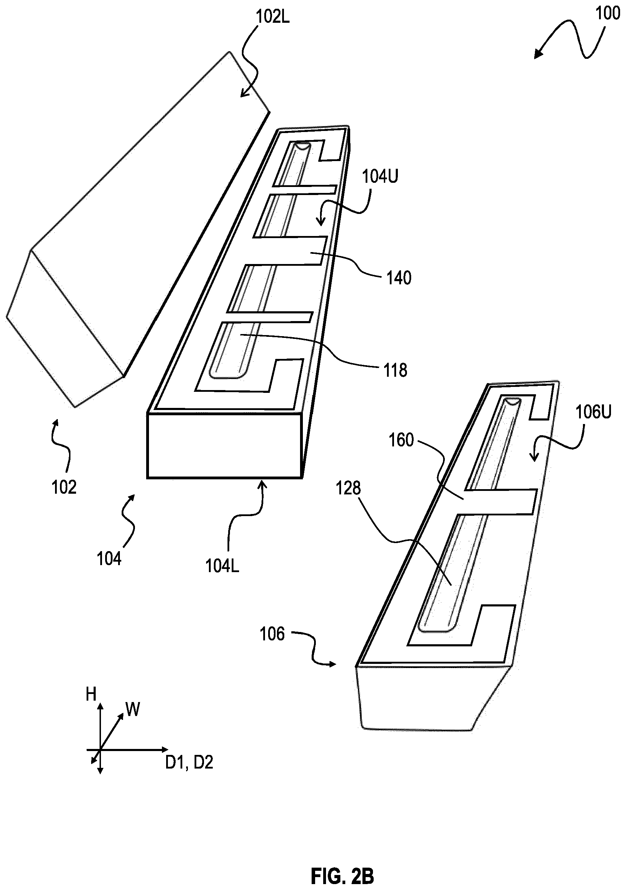

FIG. 2A and 2B schematically show a cross-sectional side view and a perspective exploded view of a die system 100 according to an example. The example shown in FIG. 2A and 2B may comprise any of the features described above in connection with FIG. 1, unless indicated otherwise or technically inappropriate. The description of such features is omitted for the sake of brevity and intelligibility. The description of FIG. 2A and 2B focuses on differences and/or additional features.

In the example as shown in FIG. 2A and 2B, the die system 100 comprises an upper die part 102, an intermediate die part 104 and a lower die part 106. The upper die part 102 has a flat lower end face 102L and is arranged such that the lower end face 102L of the upper die 102 part is parallel to the first deposition direction D1 and the width direction W. The intermediate die part 104 has a flat upper end face 104U and is arranged such that the upper end face 104U of the intermediate die part 104 is parallel to the first deposition direction D1 and the width direction W. The upper die part 102 and the intermediate die part 104 are arranged such that the lower end face 102L of the upper die part 102 and the upper end face 104U of the intermediate die part 104 face each other.

The first opening 112 and the first cavity 114 are formed by a gap between the lower end face 102L of the upper die part 102 and the upper end face 104U of the intermediate die part 104. Particularly, the gap forming the first cavity 114 and the first opening 112 may be formed by interlaying the first interposer 140 between the upper die part 102 and the intermediate part 104, in particular between the lower end face 102L of the upper die part 102 and the upper end face 104U of the intermediate die part 104.

Optionally, the intermediate die part 104 may comprise a first manifold 118 formed in the upper end face 104U of the intermediate die part 104. The first manifold 118 may be formed as an elongated recess along the width direction W. The first manifold 118 may be configured such that the first material M1 that is fed to the first cavity 114 can first spread inside the first manifold 118 before filling the first cavity 114, thereby supporting a spatial distribution of the first material M1 inside the first cavity 114.

Further optionally, the lower die part 106 may comprise a second manifold 128 formed in the upper end face 106U of the lower die part 106. The second manifold 128 may be formed as an elongated recess along the width direction W. The second manifold 128 may be configured such that the second material M2 that is fed to the second cavity 124 can first spread inside the second manifold 128 before filling the second cavity 124, thereby supporting a spatial distribution of the second material M2 inside the second cavity 124.

The die system 100 in the example of FIG. 2A and 2B further comprises a lower die part 106 a lower die part that has a flat upper end face 106U and is arranged such that the upper end face 106U of the lower die part 106 is parallel to the second deposition direction D2 and the width direction W.

In this example, the intermediate die part 104 further has a flat lower end face 104L extending parallel to the second deposition direction D2 and the width direction W. The intermediate die part 104 and the lower die part 106 are arranged such that the lower end face 104L of the intermediate die part 104 and the upper end face 106U of the lower die part 106 face each other.

The second opening 122 and the second cavity 124 are formed by a gap between the lower end face 104L of the intermediate die part 104 and the upper end face 106U of the lower die part 106. Particularly, the gap forming the second cavity 124 and the second opening 122 may be formed by interlaying the second interposer 160 between the intermediate die part 104 and the lower part 106, in particular between the lower end face 104L of the intermediate die part 104 and the upper end face 106U of the intermediate die part 106.

Further in the example of FIG. 2A and 2B, the first opening 112 is offset from the second opening 122 in the first deposition direction D1 as well as in the second deposition direction D2. In FIG. 2A, the offset is labelled with OD. In the example as shown in FIG. 2A and 2B, the first deposition direction D1 and the second deposition direction D2 are parallel due to the arrangement of the cavities 114 and 124 in relation to the respective opening 112 and 122.

Moreover in the example of FIG. 2A and 2B, the first opening 112 and the second opening 122 are spaced apart in a height direction H that is perpendicular to the first deposition direction D1 and perpendicular to the second deposition direction D2.

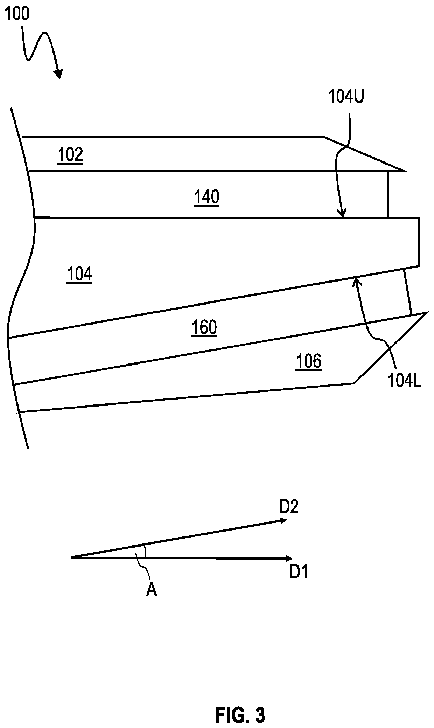

FIG. schematically shows a cross-sectional side view of a die system according to an example. The example shown in FIG. 3 may comprise any of the features described above in connection with FIG. 1 or FIG. 2A and 2B, unless indicated otherwise or technically inappropriate. The description of such features is omitted for the sake of brevity and intelligibility. The description of FIG. 3 focuses on differences and/or additional features.

The die system in the example of FIG. 3 also comprises the upper die part 102, the intermediate die part 104 and the lower die part 106 as described above. Accordingly, the first cavity and the first opening 112 are formed by a gap formed by the first interposer 140 between the upper die part 102 and the intermediate die part 104. The second cavity and the second opening 122 are formed by a gap formed by the second interposer 160 between the intermediate die part 104 and the lower die part 106.

Further in the example of FIG. 3, the intermediate die part 104 and the lower die part 106 are shaped and arranged such that the first deposition direction D1 and the second deposition direction D2 form an angle A therebetween. The angle A may be formed in a plane parallel to the both deposition direction D1 and D2. In particular, the intermediate die part 104 may be formed such that the upper end face 104U and the lower end face 104L thereof form the angle A therebetween.

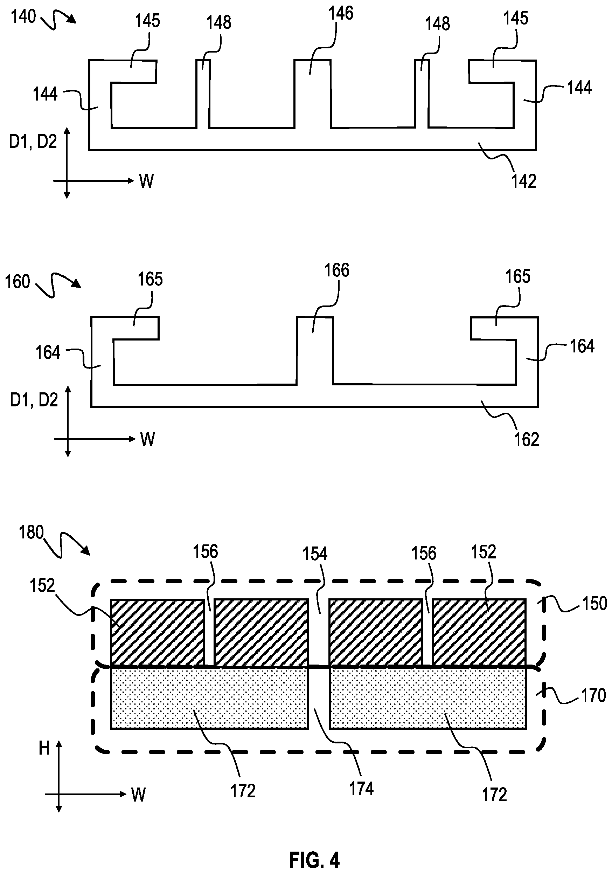

FIG. 4 schematically shows plan views of examples of interposers 140, 160 and thickness profiles 150, 170. The examples shown in FIG. 4 may correspond to any of the interposers described above in connection with FIG. 1 to 3, unless indicated otherwise or technically inappropriate. The description of such features is omitted for the sake of brevity and intelligibility. The description of FIG. 4 focuses on differences and/or additional features.

Generally, any of the examples shown in FIG. 4 may be used as the first interposer 140 and/or the second interposer 160. The first interposer 140 and the second interposer 160 may generally include any of the corresponding features as described above, unless indicated otherwise or technically inappropriate. For the sake of simplicity, reference will be made to the top example in FIG. 4 as the first interposer 140, and to the middle example in FIG. 4 as the second interposer 160.

The first interposer 140 comprises a base portion 142 and a first number of flow barriers 144, 146, 148 which each extend, and particularly are elongated, from the base portion 142 towards the first opening (not shown in FIG. 4, refers to the upward direction in the orientation of FIG. 4) in the first deposition direction D1. The base portion 142 of the first interposer 140 is elongated along the width direction W.

The second interposer 160 comprises a base portion 162 and a second number of flow barriers 164, 166, each of which extend, and particularly are elongated, from the base portion 162 of the second interposer 160 towards the second opening (not shown in FIG. 4, refers to the upward direction in the orientation of FIG. 4) in the second deposition direction D2. The first number is different from, and particularly greater than, the second number. The base portion 162 of the second interposer 160 is elongated along the width direction W.

Further in FIG. 4, examples of thickness profiles 150, 170 are shown. The first thickness profile 150 may be made of the first material M1 and may correspond to the first interposer 140 shown in FIG. 4. The second thickness profile 170 may be made of the second material M2 and may correspond to the second interposer 160 shown in FIG. 4. The first profile 150 may be stacked on the second profile 170, which may be referred to as a combined thickness profile 180.

The flow barriers 144, 146, 148 of the first interposer 140 are spaced from one another in the width direction W. The flow barriers 144, 146, 148 of the first interposer 140 include two side flow barriers 144 arranged at opposite outermost positions of the base portion 142 with respect to the width direction W. The side flow barriers 144 may be further configured as described above. In particular, the side flow barriers 144 may be capable of confining the first material M1 inside a volume that is defined by the base portion 142 and the side flow barriers 144.

Optionally, the first interposer 140 may further comprise flow narrowing portions 145 each extending from the respective side flow barrier 144 inwardly in the width direction W. The flow narrowing portions 145 may restrict a width of the first material M1 discharging through the first opening.

The flow barriers 144, 146, 148 of the first interposer 140 include a central flow barrier 146 arranged in a central position with respect to the width direction W. The central flow barrier 146 may have an increased width in comparison to widths of the other flow barriers 144, 148. The central flow barrier 146 may provide a material free area 154, i.e., an area free of the first material M1, in a corresponding position of the first thickness profile 150 when the first material M1 is discharged from the first cavity 114 along the first interposer 140.

In addition, the first interposer 140 comprises two auxiliary flow barriers 148 each having a width that is smaller than the width of the central flow barrier 146. The auxiliary flow barriers 148 may each provide a material free area 154, i.e., an area free of the first material M1, in a corresponding position of the first thickness profile 150 when the first material M1 is discharged from the first cavity 114 along the first interposer 140. In the example of FIG. 4, the auxiliary flow barriers 148 are positioned between the central flow barrier 146 and each of the side flow barriers 144.

As shown in FIG. 4, the flow barriers 164, 166 of the second interposer 160 correspond to a subset of the flow barriers 144, 146 of the first interposer 140 with respect to positions, shapes and sizes. In particular, the base portion 162 of the second interposer 160 may have a same size and a same shape as the base portion 142 of the first interposer 140. Particularly, the second interposer 160 comprises two side flow barriers 164 corresponding to the side flow barriers 144 in terms of the respective positions, shapes and sizes. Optionally, the second interposer 160 also comprises flow narrowing portions 165 extending from the respective side flow barriers 164 inwardly in the width direction W. The second interposer 160 comprises a central flow barrier 166 that corresponds to the central flow barrier 146 of the first interposer 140 in terms of the position, size and shape. Any of the first thickness profile and the second thickness profile may be as specified above.

Using the first interposer 140 and the second interposer 160 as shown in FIG. 4 may result in the first thickness profile 150 and the second thickness profile 170 as shown in FIG. 4. In this example, the second material M2 has been deposited first and then the first material M1 is deposited on top in the above-described manner.

In the example of FIG. 4, the second thickness profile 170 has material deposited areas 172 corresponding to areas between the side flow barriers 164 and the central flow barrier 166. Furthermore, the second thickness profile 170 has a material free area 174 between the material deposited areas 172 corresponding to the central flow barrier 166.

In the example of FIG. 4, the first thickness profile 140 has material deposited areas 152 corresponding to areas between every two neighboring flow barriers 144,146,148. The first thickness profile 150 has a material free area 154 corresponding to the central flow barrier 166 between two of the material deposited areas 152. Furthermore, the first thickness profile 150 has two additional material free areas 156 corresponding to the auxiliary flow barriers 148 between every other two of the material deposited areas 152.

In FIG. 4, the thickness profiles 150, 170 are depicted to have flat top surfaces, sharp edges and vertical sidewalls for the sake of simplicity. In reality, the top surfaces may be coarse, the edges may be rounded and/or the boundaries may exhibit ramps rather than vertical sidewalls.

FIG. 5A and 5B each schematically show a cross-sectional plan view of a system according to an example. In particular, the examples in FIG. 5A and 5B may illustrate different stages of the battery manufacturing method as described above. The examples shown in FIG. 5A and 5B may be configured as described above in connection with FIG. 1 to 4, unless indicated otherwise or technically inappropriate. In particular, the examples shown in FIG. 5A and 5B may be combined with the example shown in FIG. 1. The description of such features is omitted for the sake of brevity and intelligibility. The description of FIG. 5A and 5B focuses on differences and/or additional features. Any of the structural features shown in FIG. 5A and 5B may be configured as described above, particularly as described above in connection with FIG. 1 to 4.

First, the second material M2 is fed to the second cavity 124 of the die system 100 such that the second material M2 fills the second cavity 124 and discharges through the second opening 122. The second material M2 may be as described above, and particularly may include an active material to produce a secondary battery.

Then, a substrate (not explicitly shown) may be conveyed in front of the second opening 122 of the die system 100 such that the second material M2 is deposited on the substrate with a second thickness profile 170. The method may comprise using the coating roll 20 on which the substrate is conveyed in front of the second opening 122 and, subsequently, in front of the first opening 112 by a rotation R of the coating roll 20 around its rotation axis Rx, see also FIG. 1.

The second thickness profile 170 may be obtained by using the second interposer 160 that is configured in the above-described manner. Particularly, the second interposer 160 comprises the base portion 162 and the flow barriers 164, 166 in the above-described manner in order to obtain the second thickness profile 170.

Then, the first material M1 is fed to the first cavity 112 of the die system 100 such that the first material M1 fills the first cavity 114 and discharges through the first opening 112. The first material M1 may be as described above, and particularly may include an active material to produce a secondary battery. The first material M1 may be the same as, or different from, the second material M2.

Then, the substrate is conveyed in front of the first opening 112 of the die system 100 such that the first material M1 is deposited on the substrate with the first thickness profile 150 on top of the second material M2 deposited on the substrate.

The first thickness profile 150 may be obtained by using the second interposer 140 that is configured in the above-described manner. Particularly, the first interposer 140 comprises the base portion 142 and the flow barriers 164, 166, 168 in the above-described manner in order to obtain the first thickness profile 150. The first thickness profile 150 and the second thickness profile 170 are different form each other, particularly by means of using different interposers 140 and 160 in the first cavity 114 and the second cavity 124, respectively.

## Claims

1. A die system comprising:
a first opening and a first cavity fluidly connected to each other; and
a second opening and a second cavity fluidly connected to each other, wherein the second opening is spaced from the first opening,
wherein the die system is adapted to receive a first material in the first cavity and to discharge the first material along a first deposition direction through the first opening,
wherein the die system is adapted to extrude a second material in the second cavity and to discharge the second material along a second deposition direction through the second opening,
wherein the die system further comprises:
a first interposer arranged in the first cavity and adapted such that the first material discharged from the first cavity and along the first interposer forms a first thickness profile;
a second interposer arranged in the second cavity and adapted such that the second material discharged through the second cavity and along the second interposer forms a second thickness profile that is different from the first thickness profile.

2. The die system of claim 1,
wherein the first interposer comprises a base portion and a first number of flow barriers extending from the base portion of the first interposer towards the first opening in the first deposition direction,
wherein the second interposer comprises a base portion and a second number of flow barriers extending from the base portion of the second interposer towards the second opening in the second deposition direction,
wherein the first number is different from the second number.

3. The die system of claim 2,
wherein the base portion of the first interposer is elongated along the width direction, and at least some of the flow barriers of the first interposer are elongated along the first deposition direction,
wherein the base portion of the second interposer is elongated along the width direction, and at least some of the flow barriers of the second interposer are elongated along the second deposition direction,
wherein the width direction is perpendicular to the first deposition direction and perpendicular to the second deposition direction.

4. The die system of claim 2 or 3,
wherein the first interposer includes two side flow barriers arranged at opposite outermost positions of the base portion of the first interposer with respect to the width direction.

5. The die system of any of claims 2 to 4,
wherein at least two of the flow barriers of the first interposer have widths that are different from one another.

6. The die system of any of claims 2 to 5,
wherein the first number is greater than the second number,
wherein the flow barriers of the second interposer correspond to a subset of the flow barriers of the first interposer with respect to positions, shapes and/or sizes.

7. The die system of any of the preceding claims, further comprising:
an upper die part that has a flat lower end face and is arranged such that the lower end face of the upper die part is parallel to the first deposition direction and the width direction;
an intermediate die part that has a flat upper end face and is arranged such that the upper end face of the intermediate die part is parallel to the first deposition direction and the width direction,
wherein the upper die part and the intermediate die part are arranged such that the lower end face of the upper die part and the upper end face of the intermediate die part face each other,
wherein the first opening and the first cavity are formed by a gap between the lower end face of the upper die part and the upper end face of the intermediate die part.

8. The die system of claim 7, further comprising:
a lower die part that has a flat upper end face and is arranged such that the upper end face of the lower die part is parallel to the second deposition direction and the width direction,
wherein the intermediate die part further has a flat lower end face extending parallel to the second deposition direction and the width direction,
wherein the intermediate die part and the lower die part are arranged such that the lower end face of the intermediate die part and the upper end face of the lower die part face each other,
wherein the second opening and the second cavity are formed by a gap between the lower end face of the intermediate die part and the upper end face of the lower die part.

9. The die system of any of the preceding claims,
wherein the first opening and the second opening are spaced apart in a direction perpendicular to the first deposition direction and/or perpendicular to the second deposition direction.

10. The die system of any of the preceding claims,
the first opening is offset from the second opening with respect to the first deposition direction.

11. The die system of any of the preceding claims, further comprising:
a first supply system fluidly connected to the first cavity, the first supply system being configured to feed the first material to the first cavity at a first mass flow rate; and
a second supply system fluidly connected to the second cavity, the second supply system being configured to feed the second material to the second cavity at a second mass flow rate,
wherein the first supply system and the second supply system are operable such that the first mass flow rate and the second flow rate are controllable independently from each other.

12. A secondary battery manufacturing system comprising the die system of any of the preceding claims, and further comprising:
a coating roll configured to convey a substrate towards the die system so as to enable the die system to deposit the first material and the second material on the substrate,
wherein the coating roll is arranged in relation to the die system and is operable to rotate such that the substrate is first conveyed in front of the second opening and then in front of the first opening.

13. The secondary battery manufacturing system of claim 12,
wherein a spacer tape is arranged on the coating roll along a circumferential direction of the coating roll.

14. The secondary battery manufacturing system of claim 12 or 13,
wherein the first material and/or the second material contains an active material, particularly an active material for a positive electrode, of a secondary battery.

15. A secondary battery manufacturing method using the die system of any of claims 1 to 12, the method comprising:
feeding the second material to the second cavity of the die system such that the second material fills the second cavity and discharges through the second opening;
conveying a substrate in front of the second opening of the die system such that the second material is deposited on the substrate;
feeding the first material to the first cavity of the die system such that the first material fills the first cavity and discharges through the first opening; and
conveying the substrate in front of the first opening of the die system such that the first material is deposited on the substrate with the first thickness profile on top of the second material deposited on the substrate with the first thickness profile.
